# EUROPEAN PATENT APPLICATION

(11) **EP 1 887 471 A2**
(43) Date of publication of application: **13.02.2008**
(21) Application number: 07015192.3
(22) Date of filing: 02.08.2007
(51) Int. Cl.: G06F 11/20

(54) **Duplex system and processor switsching method**

(30) Priority: 10.08.2006 JP 2006218898
(71) Applicant: FUJITSU LIMITED, Kawasaki-shi, Kanagawa 211-8588 (JP)
(72) Inventor: Tsuiji, Eiichi, Fukuoka 814-8588 (JP); Kawasaki, Naoki, Fukuoka 814-8588 (JP); Yamaguchi, Kunio, Fukuoka 814-8588 (JP); Uemura, Kazunori, Fukuoka 814-8588 (JP); Tamura, Ryouko, Fukuoka 814-8588 (JP)
(74) Representative: HOFFMANN EITLE

(57) **Abstract**

The occurrence of a failure in any of an operational processor and a standby processor is monitored, and when a failure occurs in the operational processor, switching to the standby processor is made. A cache memory of each processor has a plurality of ports through which data can be read and written simultaneously. A cache memory controller of the operational processor transfers an update for the cache memory to the cache memory of the standby processor by using a port different from the port used for updating. A cache memory controller of the standby processor writes the received update into the cache memory by using a port different from the port used for updating.

## Description

### BACKGROUND

### 1. Technical Field

The present application relates to a duplex system and a processor switching method in which a cache memory and a cache memory controller are provided in each of an operational processor and a standby processor, the cache memories are readable and writable through a plurality of ports, and the contents of update of the cache memory of the operational processor can be reflected in the cache memory of the standby processor at the time of the update.

### 2. Description of the Related Art

Recent communication systems include quite a few computers that are strongly required to operate with stability for 24 hours such as multimedia exchanges in mobile communication systems. To improve the reliability of these computers, duplex systems, for example, are adopted in which the processor, the cache memory, the main memory, the main memory controller, and the failure monitor that monitors the occurrence of a failure in any of the operational and standby systems are each duplexed, the operational system performs information processing under normal conditions, and when a failure occurs, switching to the standby system is made.

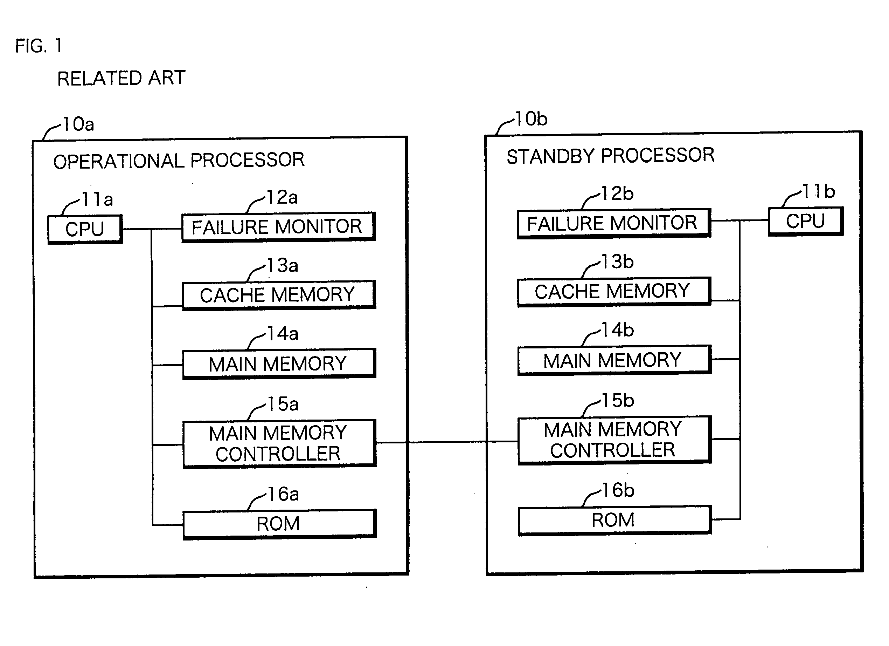

FIG. 1 is a block diagram showing an example of the configuration of a conventional duplex system. The conventional duplex system includes an operational processor 10a and a standby processor 10b. The data written into a main memory 14a in the operational processor 10a is written into a main memory 14b of the standby system by a main memory controller 15a. When a failure monitor 12a of the operational processor 10a detects the occurrence of a failure, CPUs 11a and 11b of the operational processor 10a and the standby processor 10b are both reset, and switching between the operational processor 10a and the standby processor 10b is made, whereby the CPU of the new operational processor continues the processing by using the main memory of the system including the CPU.

It is common practice to provide cache memories 13a and 13b for a faster access to the memories. A so-called copy-back method is frequently used as a method for controlling the operations of the cache memories 13a and 13b. When the CPU 11a of the operational processor 10a executes an instruction to write data into the main memory 14a, the CPU 11a does not write the data directly into the main memory 14a but writes it only into the cache memory 13a. Since the cache memory 13a has a smaller capacity than the main memory 14a, the data is written back (copied back) to the main memory 14a when the cache memory 13a is overflowed. That is, the latest data is present only in the cache memory 13a until it is written back to the main memory 14a.

The main memory controller 15a writes the data written back to the main memory 14a, into the main memory 14b of the standby processor 10b through the main memory controller 15b. When the CPUs 11a and 11b are reset, the CPU 11a of the operational processor 10a forces the data that is present only in the cache memory 13a to be reflected in the main memory 14a, and instructs the main memory controller 15a to stop the memory duplex control (see Japanese Unexamined Patent Application Publications Nos. H06-67979 and 2003-223338).

The CPU 11b of the standby processor 10b resumes the suspended processing by using the main memory 14b of the standby processor 10b. As described above, when the CPUs 11a and 11b are reset, the processing can be resumed by the standby processor 10b in a case where the duplex condition of the main memories 14a and 14b continues and so-called flushing in which the contents of the cache memory 13a are forcibly written into the main memory 14a can be finished normally.

However, when the above-described copy-back method is adopted, a problem arises in which there are cases where the processing cannot be resumed by the standby processor 10b. For example, when an address parity error occurs on the CPU bus of the operational processor 10a, the processing by software cannot be continued. Therefore, even when the CPUs 11a and 11b are reset, the processing cannot be continued because the flushing of the cache memory 13a of the operational processor 10a cannot be performed and the information used when the operational processor is switched to the standby processor 10b to resume the processing disaccords with the contents of the main memory 14a of the operational processor 10a that is the operational processor before the switching.

In addition, for example, when a failure occurs in the power supply system that supplies power to the cache memory 13a and parts of the operational processor 10a and the data in the cache memory 13a is lost, the processing cannot be continued because the flushing of the data stored only in the cache memory 13a, into the main memory 14a cannot be performed and the information used when the operational processor is switched to the standby processor 10b to resume the processing disaccords with the contents of the main memory 14a of the operational processor 10a that is the operational processor before the switching.

### SUMMARY

The present invention is made in view of such circumstances, and an object thereof is to provide a duplex system and a processor switching method in which by providing a cache memory and a cache memory controller in each of an operational processor and a standby processor and making the cache memories readable and writable through a plurality of ports, the contents of the cache memories provided in the processors can be made to accord with each other at the time of the update of the cache memory.

To attain the above-mentioned object, a duplex system according to the present invention includes an operational processor that mainly performs computing; and a standby processor that performs computing when a failure occurs in the operational processor. The operational processor and the standby processor include respectively: a main memory; a memory controller that controls an operation of the main memory; a cache memory having a plurality of ports through which data is simultaneously readable and writable; a cache memory controller that relays data read and written through the plurality of ports, and controls reading and writing of data from and into the cache memory; and a failure monitor that monitors the occurrence of a failure in the processor including the failure monitor, and when a failure occurs in the processor including the failure monitor, notifies the other processor of the occurrence of the failure. The cache memory controller of the operational processor includes means for transferring data to be written into the cache memory of the operational processor, to the cache memory controller of the standby processor when relaying the data. The cache memory controller of the standby processor includes means for receiving the data transferred from the cache memory controller of the operational processor; means for writing the received data into the cache memory of the standby processor, by using one of the plurality of ports; and means for writing data generated by the processor including the cache memory controller of the standby processor, into the cache memory of the standby processor, by using a port different from the port used for writing the received data. When the failure monitor determines that a failure has occurred in the operational processor, switching between the operational processor and the standby processor is made.

Moreover, in the duplex system according to the present invention, the cache memory controller of the operational processor includes means for determining whether the data to be written into the cache memory of the operational processor is normal or not; and when it is determined that the data is normal, the data is written into the cache memory of the operational processor, and the data is transferred to the cache memory controller of the standby processor.

Moreover, in the duplex system according to the present invention, the cache memory controller of the operational processor includes means for, when an overflow occurs because of data written into the cache memory of the operational processor, transferring data already written in the cache memory, to the main memory controller of the operational processor; the main memory controller of the operational processor includes means for writing the received data from the cache memory controller, into the main memory of the operational processor, and transferring the data to the main memory controller of the standby processor; and the main memory controller of the standby processor includes means for writing the received data into the main memory of the standby processor.

Moreover, in a processor switching method according to the present invention for switching between an operational processor that mainly performs computing and a standby processor that performs computing when a failure occurs in the operational processor, data to be written into a cache memory of the operational processor is transferred to a cache memory controller of the standby processor when the data is relayed by a cache memory controller of the operational processor; the transferred data is received by the cache memory controller of the standby processor; the received data is written into a cache memory of the standby processor by using one of a plurality of ports that the cache memory of the standby processor has; data generated by the standby processor is written into the cache memory by using a port different from the port used for writing the received data; it is determined whether a failure occurs in the operational processor or not; and switching between the operational processor and the standby processor is made when it is determined that a failure occurs in the operational processor.

Moreover, in the processor switching method according to the present invention, it is determined whether the data to be written into the cache memory of the operational processor is normal or not; and when it is determined that the data is normal, the data is written into the cache memory, and the data is transferred to the cache memory controller of the standby processor.

Moreover, in the processor switching method according to the present invention, when an overflow occurs because of data written into the cache memory of the operational processor, data already written in the cache memory is transferred to the main memory controller of the operational processor; the data transferred to the main memory controller is written into the main memory of the operational processor, and the data is transferred to the main memory controller of the standby processor; and the data transferred to the main memory controller is written into the main memory of the standby processor.

According to the present invention, the operational processor that mainly performs computing and the standby processor that performs computing when a failure occurs in the operational processor include respectively the cache memory, the main memory, the main memory controller, and the failure monitor that monitors the occurrence of a failure in any of the operational processor and the standby processor. When the failure monitor determines that a failure occurs in the system including the failure monitor, the failure monitor instructs the processor of the system including the failure monitor to notify the processor of the other system of the occurrence of the failure. When the processor of the system including the failure monitor is the operational processor, switching to the standby processor is made. In a case where a failure notification is received from the processor of the other system, when the processor of the system including the failure monitor is the standby processor, switching to the operational processor is made. The cache memory has a plurality of ports through which data is simultaneously readable and writable. The cache memory controller that controls an operation of the cache memory is provided in each of the operational processor and the standby processor. The cache memory controller of the operational processor relays an update for the cache memory of the operational processor, and when relaying an update, the cache memory controller of the operational processor transfers the update to the cache memory of the standby processor. The cache memory controller of the standby processor writes the update received from the operational processor, into the cache memory by using a port different from the port used for updating the cache memory.

With this structure, when the contents of the cache memory of the operational processor are updated, the update itself is transferred to the cache memory of the standby system in parallel with flushing into the main memory. Consequently, even when flushing of the cache memory of the operational processor cannot be performed due to the occurrence of a failure, since the contents of the cache memory of the standby processor and the contents of the cache memory of the operational processor accord with each other, the processing can be continued by using the contents of the cache memory provided in the processor to which switching has been made to resume the processing.

Moreover, according to the present invention, when relaying the update for the cache memory of the operational processor, the cache memory controller of the operational processor determines whether the update written in the cache memory is normal or not. The cache memory controller of the operational processor transfers the update to the cache memory of the standby processor only when determining that the update is normal.

Consequently, only when the contents written in the cache memory are normal data, the data can be transferred to the cache memory of the standby processor, so that the situation can be prevented that the processing cannot be resumed after the processor switching because of the transfer of erroneous data.

Moreover, according to the present invention, when an overflow occurs because of data written into the cache memory of the processor of the operational system, the already written data is written into the main memory of the processor of the operational system, and the data is also transferred to the main memory controller of the standby processor and written into the main memory of the standby processor.

Consequently, the latest data is present only in the cache memory until it is written back to the maim memory

The above and further objects and features of the invention will more fully be apparent from the following detailed description with accompanying drawings.

### BRIEF DESCRIPTION OF THE SEVERAL VIEWS OF THE DRAWINGS

FIG. 1 is a block diagram showing the example of the configuration of the conventional duplex system;
FIG. 2 is a block diagram showing the configuration of a duplex system according to a first embodiment;
FIG. 3 is a flowchart showing the processing procedure of a cache memory controller of an operational processor and a cache memory controller of a standby processor in the duplex system according to the first embodiment;
FIG. 4 is a flowchart showing the processing procedure of the cache memory controller of the standby processor when a failure occurs in the operational processor in the duplex system according to the first embodiment; and
FIG. 5 is a flowchart showing the processing procedure of a cache memory controller of an operational processor and a cache memory controller of a standby processor in a duplex system according to a second embodiment.

### DETAILED DESCRIPTION

Hereinafter, embodiments will be described in detail based on the drawings.

### First Embodiment

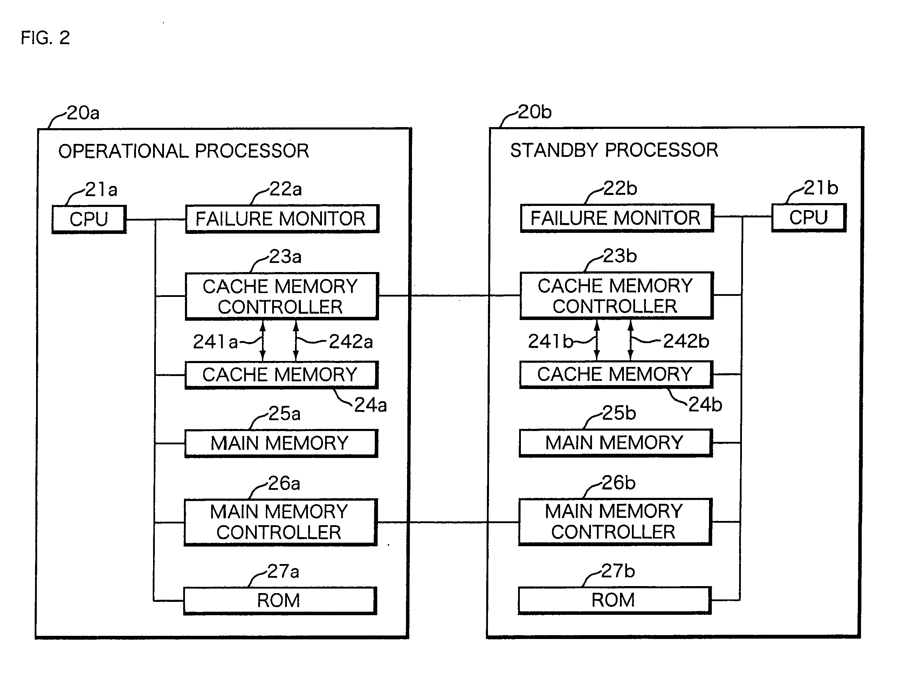

FIG. 2 is a block diagram showing the configuration of a duplex system according to a first embodiment. As shown in FIG. 2, the duplex system according to the first embodiment includes an operational processor 20a and a standby processor 20b.

The operational processor 20a includes a processor board provided with at least a CPU 21a, a failure monitor 22a, a cache memory controller 23a, a cache memory 24a, a main memory 25a, a main memory controller 26a, and a ROM 27a. The standby processor 20b also includes a processor board provided with at least a CPU 21b, a failure monitor 22b, a cache memory controller 23b, a cache memory 24b, a main memory 25b, a main memory controller 26b, and a ROM 27b.

The CPUs 21a and 21b perform specific processing according to the programs stored in the ROMs 27a and 27b. The failure monitors 22a and 22b are interconnected through a communication line, and determine whether a failure occurs in any of the processors or not according to the presence or absence of a response signal, for example, to a heart-beat signal.

The cache memory controllers 23a and 23b are readably and writably connected to the cache memories 24a and 24b, respectively. In addition, the cache memory controllers 23a and 23b are interconnected through a communication line in such a manner that data communication can be performed therebetween. When the data in the cache memory 24a or 24b is updated, the cache memory controller 23a or 23b transmits the update to the other processor through the communication line. That is, when writing into the main memory 25a occurs by the processing in the operational processor 20a, first, writing into the cache memory 24a is started. When writing into the cache memory 24a is started, the cache memory controller 23a writes the update into the cache memory 24b of the standby processor 20b through the communication line.

The cache memories 24a and 24b are dual-port memories having two ports: first ports 241a and 241b through which data can be read and written only from and into an operational area for temporarily storing data to be written into the main memories 25a and 25b according to the program stored in the ROM; and second ports 242a and 242b through which data is read and written from and into a maintenance area used only for reading and writing data required only within each processor. The cache memory controller 23a or 23b transfers only the update written into the operational data, to the cache memory 24a or 24b of the other processor.

When the CPU 21a of the operational processor 20a executes an instruction to write data into the main memory 25a, the CPU 21a does not write the data directly into the main memory 25a but writes it only into the cache memory 24a. Since the cache memory 24a has a smaller capacity than the maim memory 25a, the data is written back (copied back) to the main memory 25a when the cache memory 24a is overflowed.

The main memory controller 26a writes the data written back to the main memory 25a, into the main memory 25b of the standby processor 20b through the main memory controller 26b. The ROMs 27a and 27b store the processing programs executed by the operational processor 20a and the standby processor 20b. The stored programs are for performing the same processing, and are executed by using the main memories 25a and 25b.

The operation of the duplex system having the above structure will be described. The CPU 21a of the operational processor 20a performs predetermined processing according to the program stored in the ROM 27a. When the CPU 21a writes data into the main memory 25a, the update to be written into the main memory 25a is written, first, into the cache memory 24a through the cache memory controller 23a.

The writing of the update into the cache memory 24a is performed into the operational area through the first port 241a. The cache memory controller 23a transfers the update to the cache memory 24b of the standby processor 20b at the time of the provision of an instruction to write the update into the operational area of the cache memory 24a. The cache memory controller 23b of the standby processor 20b writes the update transferred to the operational area, through the first port 241b of the cache memory 24b.

Normally, a predetermined maintenance program is running on the standby processor 20b. When the CPU 21b writes data into the main memory 25b by executing the maintenance program, the update to be written into the main memory 25b is written into the cache memory 24b through the cache memory controller 23b like in the operational processor 20a. The update by the maintenance program is written into the maintenance area of the cache memory 24b through the second port 242b. The update transferred through the first port 241b is not written into the maintenance area. Therefore, the update transferred from the operational processor 20a can be written into the operational area of the cache memory 24b even when writing into the cache memory 24b has been performed by the maintenance program, so that the contents stored in the operational areas of the cache memories 24a and 24b of the operational and standby processors 20a and 20b can be made to accord with each other.

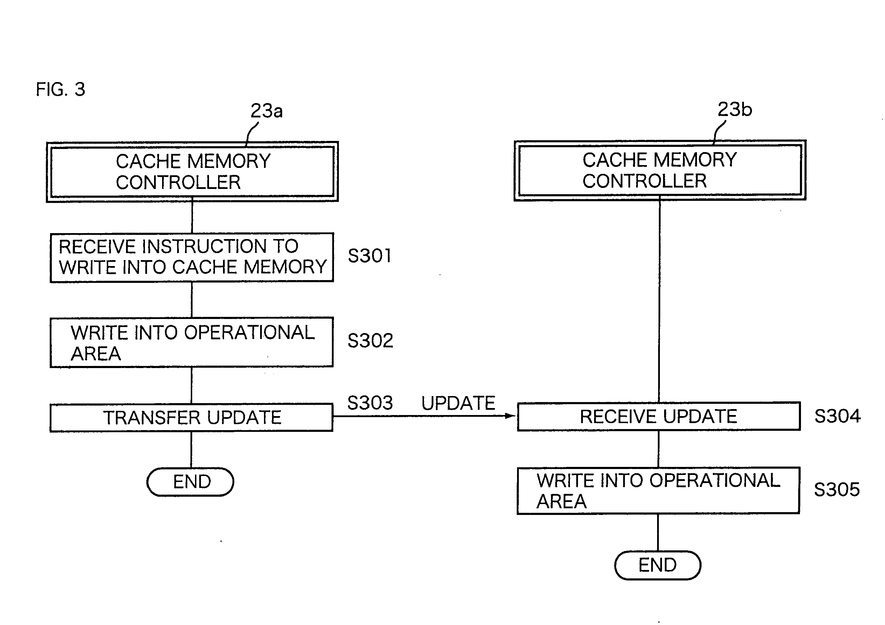

FIG. 3 is a flowchart showing the processing procedure of the cache memory controller 23a of the operational processor 20a and the cache memory controller 23b of the standby processor 20b in the duplex system according to the first embodiment. The cache memory controller 23a receives an instruction to write an update into the cache memory 24a, from the CPU 21a (step S301). The cache memory controller 23a writes the update into the operational area of the cache memory 24a through the first port 241a (step S302).

On the other hand, the cache memory controller 23a transfers the update to the cache memory controller 23b of the standby processor 20b (step S303). The cache memory controller 23b of the standby processor 20b receives the update (step S304), and writes the update into the operational area of the cache memory 24b through the first port 241b (step S305).

When a failure occurs in the operational processor 20a, the failure monitor 22a of the operational processor 20a provides a reset instruction to both of the CPUs 21a and 21b, and transmits data indicating the occurrence of the failure, to the failure monitor 22b of the standby processor 20b. When the reset instruction is provided, the CPUs 21a and 21b switch the operational processor 20a to the standby system, and the standby processor 20b to the operational system.

The failure monitor 22b of the operational processor 20b (former standby system) and the failure monitor 22a of the standby processor 20a (former operational system) after the switching transmit data indicating whether the systems including the failure monitors 22b and 22a are the operational system or the standby system, to the cache memory controllers 23a and 23b. Thereby, the cache memory controller 23b of the operational processor 20b (former standby system) switches the port used for writing into the cache memory 24b, from the second port to the first port. Thereby, the update for the cache memory 24b by an instruction from the CPU 21b is written into the operational area of the cache memory 24b.

On the other hand, the cache memory controller 23a of the standby processor 20a (former operational system) switches the port used for writing into the cache memory 24a, from the first port to the second port. Thereby, the update for the cache memory 24a by an instruction from the CPU 21a is written only in the maintenance area which is an area for writing according to the maintenance program.

The CPU 21b of the operational processor 20b (former standby system) after the switching performs flushing of the update written in the cache memory 24b, into the main memory 25b, and resumes the processing.

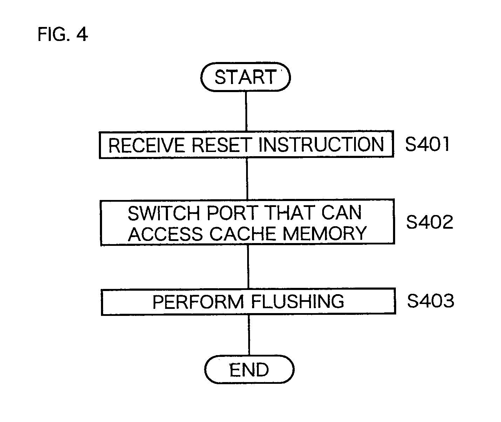

FIG. 4 is a flowchart showing the processing procedure of the cache memory controller 23b of the standby processor 20b when a failure occurs in the operational processor 20a in the duplex system according to the first embodiment. The cache memory controller 23b of the standby processor 20b receives the reset instruction from the CPU 21b (step 5401). The cache memory controller 23b switches the port that can access the cache memory 24b, from the second port 242b to the first port 241b (step S402).

The cache memory controller 23b performs flushing in which the data stored in the operational area of the cache memory 24b is forcibly written into the main memory 25b through the first port 241b to which switching has been made (step S403). Thereby, the CPU 21b of the former standby processor 20b to which switching has been made can continue the processing by using the same data as that of the cache memory 24a of the operational processor 20a in which the failure occurs.

As described above, according to the first embodiment, when the contents of the cache memory 24a of the operational processor 20a are updated, the update itself is transferred to the cache memory 24b of the standby processor 20b in parallel with the flushing into the main memory 25a. Therefore, even when the flushing of the cache memory 24a of the operational processor 20a cannot be performed because of the occurrence of a failure, since the contents of the cache memory 24b of the standby processor 20b and the contents of the cache memory 24a of the operational processor 20a accord with each other, the processing can be continued by using the contents of the cache memory 24b provided in the former standby processor 20b to which switching has been made to resume the processing.

### Second Embodiment

Since the configuration of a duplex system according to a second embodiment is similar to that of the duplex system according to the first embodiment, the same elements are denoted by the same reference numbers, and detailed descriptions thereof are omitted. The second embodiment is different from the first embodiment in that the cache memory controllers that control the operation of the cache memories have the function of determining whether data is normal or not.

The CPU 21a of the operational processor 20a performs predetermined processing according to the program stored in the ROM 27a. When the CPU 21a writes data into the main memory 25a, the update to be written into the main memory 25a is written, first, into the cache memory 24a through the cache memory controller 23a.

The writing of the update into the cache memory 24a is performed into the operational area through the first port 241a. The cache memory controller 23a determines whether the update to be written is normal or not at the time of the provision of an instruction to write the update into the operational area of the cache memory 24a. The method for determining whether the update is normal or not is not specifically limited, and may be any method by which the correctness of data can be checked such as the parity check or the ECC check.

The cache memory controller 23a transfers the update to the cache memory 24b of the standby processor 20b only when determining that the update to be written is normal. The cache memory controller 23b of the standby processor 20b writes the update transferred to the operational area, through the first port 241b of the cache memory 24b.

Normally, a predetermined maintenance program is running on the standby processor 20b. When the CPU 21b writes data into the main memory 25b by executing the maintenance program, the update to be written into the main memory 25b is written into the cache memory 24b through the cache memory controller 23b like in the operational processor 20a. The update by the maintenance program is written into the maintenance area of the cache memory 24b through the second port 242b. The update transferred through the first port 241b is not written into the maintenance area. Therefore, the update transferred from the operational processor 20a can be written into the operational area of the cache memory 24b even when writing into the cache memory 24b has been performed by the maintenance program, so that the contents stored in the operational areas of the cache memories 24a and 24b of the operational and standby processors 20a and 20b can be made to accord with each other.

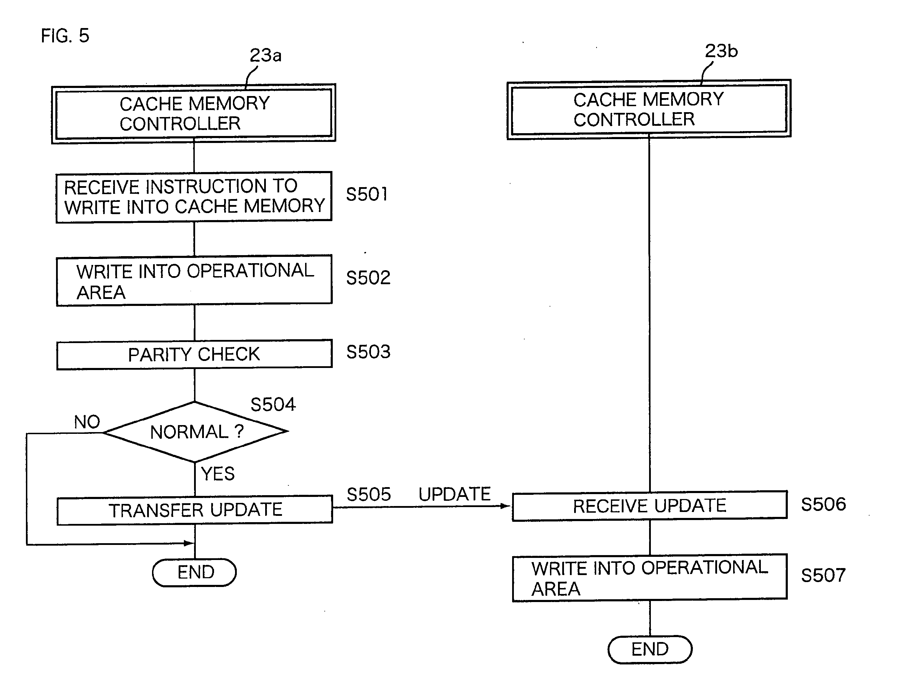

FIG. 5 is a flowchart showing the processing procedure of the cache memory controller 23a of the operational processor 20a and the cache memory controller 23b of the standby processor 20b in the duplex system according to the second embodiment. The cache memory controller 23a receives an instruction to write an update into the cache memory 24a, from the CPU 21a (step 5501). The cache memory controller 23a writes the update into the operational area of the cache memory 24a through the first port 241a (step 5502).

On the other hand, the cache memory controller 23a performs a parity check on the update (step S503), and determines whether the update is normal or not (step S504). When determining that the update is abnormal (step S504: NO), the cache memory controller 23a ends the processing without transferring the update to the standby processor 20b.

When determining that the update is normal (step S504: YES), the cache memory controller 23a transfers the update to the cache memory controller 23b of the standby processor 20b (step S505). The cache memory controller 23b of the standby processor 20b receives the update (step S506), and writes the update into the operational area of the cache memory 24b through the first port 241b (step S507).

The method for switching the system when a failure occurs in the operational processor 20a is similar to that of the first embodiment. That is, the failure monitor 22a of the operational processor 20a provides a reset instruction to both of the CPUs 21a and 21b, and transmits data indicating the occurrence of the failure, to the failure monitor 22b of the standby processor 20b. When the reset instruction is provided, the CPUs 21a and 21b switch the operational processor 20a to the standby system, and the standby processor 20b to the operational system.

The failure monitor 22b of the operational processor 20b (former standby system) and the failure monitor 22a of the standby processor 20a (former operational system) after the switching transmit data indicating whether the systems including the failure monitors 22b and 22a are the operational system or the standby system, to the cache memory controllers 23a and 23b. Thereby, the cache memory controller 23b of the operational processor 20b (former standby system) switches the port used for writing into the cache memory 24b, from the second port to the first port. Thereby, the update for the cache memory 24b by an instruction from the CPU 21b is written into the operational area of the cache memory 24b.

On the other hand, the cache memory controller 23a of the standby processor 20a (former operational system) switches the port used for writing into the cache memory 24a, from the first port to the second port. Thereby, the update for the cache memory 24a by an instruction from the CPU 21a is written only in the maintenance area which is an area for writing according to the maintenance program.

The CPU 21b of the operational processor 20b (former standby system) after the switching performs flushing of the update written in the cache memory 24b, into the main memory 25b, and resumes the processing.

As described above, according to the second embodiment, data can be transferred to the cache memory 24b of the standby processor 20b only when the contents written in the cache memory 24a of the operational processor 20a are normal data, so that the situation can be prevented that the processing cannot be resumed after the processor switching because of the transfer of erroneous data.

## Claims

1. A duplex system comprising:
an operational processor (20a) that mainly performs computing; and
a standby processor (20b) that performs computing when a failure occurs in the operational processor (20a); wherein
the operational processor (20a) and the standby processor (20b) comprise respectively:
a main memory (25a, 25b);
a memory controller (26a, 26b) that controls an operation of the main memory (25a, 25b);
a cache memory (24a, 24b) having a plurality of ports (241a, 242a, 241b, 242b) through which data is simultaneously readable and writable;
a cache memory controller (23a, 23b) that relays data read and written through the plurality of ports (241a, 242a, 241b, 242b), and controls reading and writing of data from and into the cache memory (24a, 24b); and
a failure monitor (22a, 22b) that monitors the occurrence of a failure in the processor including the failure monitor, and when a failure occurs in the processor including the failure monitor, notifies the other processor of the occurrence of the failure; and
the cache memory controller (23a) of the operational processor (20a) is further comprising means for transferring data to be written into the cache memory (24a) of the operational processor (20a), to the cache memory controller (23b) of the standby processor (20b) when relaying the data;
the cache memory controller (23b) of the standby processor (20b) is further comprising means for receiving the data transferred from the cache memory controller (23a) of the operational processor (20a);
means for writing the received data into the cache memory (24b) of the standby processor (20b), by using one of the plurality of ports (241b, 242b); and
means for writing data generated by the processor including the cache memory controller (23b) of the standby processor (20b), into the cache memory (24b) of the standby processor (20b), by using a port (242b) different from the port (241b) used for writing the received data; wherein
when the failure monitor (22a) determines that a failure has occurred in the operational processor (20a), switching between the operational processor (20a) and the standby processor (20b) is made.

2. The duplex system according to claim 1, wherein the cache memory controller (23a) of the operational processor (20a) is further comprising means for determining whether the data to be written into the cache memory (24a) of the operational processor (20a) is normal or not; wherein
when it is determined that the data is normal, the data is written into the cache memory (24a) of the operational processor (20a), and the data is transferred to the cache memory controller (23b) of the standby processor (20b).

3. The duplex system according to claim 1, wherein the cache memory controller (23a) of the operational processor (20a) is further comprising means for, when an overflow occurs because of data written into the cache memory (24a) of the operational processor (20a), transferring data already written in the cache memory (24a) to the main memory controller (26a) of the operational processor (20a);
the main memory controller (26a) of the operational processor (20a) is further comprising means for writing the received data from the cache memory controller (24a), into the main memory (25a) of the operational processor (20a), and transferring the data to the main memory controller (26b) of the standby processor (20b); and
the main memory controller (26b) of the standby processor (20b) is further comprising means for writing the received data into the main memory (25b) of the standby processor (20b).

4. A method for switching between an operational processor (20a) that mainly performs computing and a standby processor (20b) that performs computing when a failure occurs in the operational processor (20a), the method comprising the steps of
transferring data to be written into a cache memory (24a) of the operational processor (20a) to a cache memory controller (23b) of the standby processor (20b) when the data is relayed by a cache memory controller of the operational processor (20a);
receiving the transferred data by the cache memory controller (23b) of the standby processor (20b);
writing the received data into a cache memory (24b) of the standby processor by using one of a plurality of ports (241b, 242b) that the cache memory (24b) of the standby processor (20b) has;
writing data generated by the standby processor (20b), into the cache memory by using a port (242b) different from the port (241b) used for writing the received data;
determining whether a failure has occurred in the operational processor (20a) or not; and
switching between the operational processor (20a) and the standby processor (20b) when it is determined that a failure has occurred in the operational processor (20a).

5. The processor switching method according to claim 4, further comprising the steps of
determining whether the data to be written into the cache memory (24a) of the operational processor (20a) is normal or not; and
when it is determined that the data is normal, writing the data into the cache memory (24a), and transferring the data to the cache memory controller (23b) of the standby processor (20b).

6. The processor switching method according to claim 4, further comprising the steps of
when an overflow occurs because of data written into the cache memory (24a) of the operational processor (20a), transferring data already written in the cache memory (24a) to the main memory controller (26a) of the operational processor (20a);
writing the data transferred to the main memory controller (26a), into the main memory (25a) of the operational processor (20a), and transferring the data to the main memory controller (26b) of the standby processor (20b); and
writing the data transferred to the main memory controller (26b), into the main memory (25b) of the standby processor (20b).
